# EUROPEAN PATENT SPECIFICATION

(11) **EP 3 163 090 B1**
(45) Date of publication and mention of the grant of the patent: **10.10.2018**
(21) Application number: 15854491.6
(22) Date of filing: 26.10.2015
(51) Int. Cl.: F04D 29/42, F02B 39/00, F04D 29/44, F04D 29/62, F01D 21/04, F01D 25/24, F02C 6/12

(54) **CENTRIFUGAL COMPRESSOR AND SUPERCHARGER WITH SAME**
KREISELVERDICHTER UND AUFLADER DAMIT
COMPRESSEUR CENTRIFUGE ET COMPRESSEUR DE SURALIMENTATION ÉQUIPÉ DE CELUI-CI

(30) Priority: 28.10.2014 JP 2014219569
(43) Date of publication of application: 03.05.2017
(73) Proprietor: Mitsubishi Heavy Industries, Ltd., Tokyo 108-8215 (JP)
(72) Inventor: SHIRAISHI, Keiichi, Nagasaki-shi Nagasaki 850-8610 (JP)
(74) Representative: Hoffmann Eitle
(86) International application number: PCT/JP2015/080047
(87) International publication number: WO 2016/068056

(56) References cited:
- DE-A1-102004 028 133
- DE-A1-102005 039 820
- DE-C1- 10 050 931
- JP-A- 2002 257 092
- JP-A- 2005 344 713
- JP-A- 2005 351 274
- JP-U- S6 392 004

## Description

### Technical Field

The present invention relates to a centrifugal compressor and a turbocharger provided with the centrifugal compressor.

### Background Art

In the related art, as a compressor of a turbocharger which increases the pressure of air which is supplied to an internal combustion engine which is used in a ship or the like, to atmospheric pressure or more, a centrifugal compressor is known (refer to, for example, PTL 1-4). The centrifugal compressor is provided with an impeller which is mounted on a rotor shaft, an air inlet guide which accommodates the impeller, and a scroll part into which compressed air which is discharged from the air inlet guide flows. The centrifugal compressor discharges compressed air from a discharge port by guiding the compressed air from a direction of an axis line to an inclined direction while compressing air which flows in the direction of the axis line from an intake port.

In the centrifugal compressor, there is a possibility that a problem in which the whole or a part of the impeller breaks or falls off due to the influence of a centrifugal force caused by high-speed rotation and the high temperature of the compressed air may occur. PTL 2 discloses a centrifugal compressor which is provided with a shock-absorbing partition wall which protects a tank accommodating lubricating oil such that even in a case where the whole or a part of an impeller (a compressor impeller) is thrown to the outside by a centrifugal force, the lubricating oil does not leak out due to the thrown impeller.

### Citation List

### Patent Literature

[PTL 1] Japanese Unexamined Patent Application Publication No. 2011-117417
[PTL 2] Japanese Unexamined Patent Application Publication No. 2001-132465
[PTL 3] Patent Application Publication DE 10 2004 028133 A1
[PTL 4] Patent Application Publication DE 10 2005 039820 A1

### Summary of Invention

### Technical Problem

In the centrifugal compressor disclosed in PTL 2, in a case where a problem in which the whole or a part of the impeller breaks or falls off due to the influence of a centrifugal force caused by high-speed rotation occurs, the tank accommodating the lubricating oil is protected.

However, in a case where the whole or a part of the impeller breaks or falls off, thereby colliding with the air inlet guide, due to a large impact load, a bolt fixing the air inlet guide to a mounting position breaks, and thus there is a possibility that the air inlet guide may fall off from the mounting position and be thrown in a direction away from the scroll part along an axis line of the rotor shaft. In this case, the air inlet guide is thrown, thereby causing a gap (a port opening) in a part of the centrifugal compressor, and thus there is a possibility that the whole or a part (hereinafter referred to as a broken member) of the impeller which has been broken or fallen off may be thrown from the gap to the outside.

The present invention has been made in view of such circumstances and has an object to provide a centrifugal compressor in which it is possible to prevent a problem in which an air inlet guide is thrown according to breaking or falling-off of the whole or a part of an impeller, and a turbocharger provided with the centrifugal compressor.

### Solution to Problem

In order to achieve the above objects, the present invention adopts the following means.

According to an aspect of the present invention, there is provided a centrifugal compressor according to claim 1.

According to the centrifugal compressor of the aspect of the present invention, in a case where the whole or a part of the impeller breaks or falls off, the broken member is thrown in the radial direction, thereby colliding with the air inlet guide. An impact force which is applied to the air inlet guide due to the collision of the broken member with the air inlet guide has a component in the radial direction and a component in the direction of the axis line of the rotor shaft. The component in the direction of the axis line of the impact force acts in a direction separating the air inlet guide from the scroll part. The head of the fastening bolt mounting the air inlet guide on the scroll part is mounted on the end portion on the suction opening side of the air inlet guide. For this reason, the impact force in the direction separating the air inlet guide from the scroll part is transmitted to the head of the fastening bolt through the end portion on the suction opening side of the air inlet guide.

The tip of the shank of the fastening bolt is fastened to the fastening hole formed in the scroll part. The head of the fastening bolt is mounted on the end portion of the suction opening side of the air inlet guide, and therefore, the head and the tip of the shank of the fastening bolt are spaced apart from each other by a distance corresponding to the length from the end portion of the suction opening side of the air inlet guide to the fastening hole formed in the scroll part. For this reason, the impact force transmitted to the head of the fastening bolt acts on the tip of the shank spaced apart from the head. Then, tensile stress along the direction of the axis line acts on the shank of the fastening bolt due to the impact force acting on the head and the tip of the shank of the fastening bolt.

The shank of the fastening bolt has the entire length corresponding to the length from the end portion of the suction opening side of the air inlet guide to the fastening hole formed in the scroll part, and therefore, the shank can secure a sufficient amount of elastic deformation elongation in the direction of the axis line with respect to the impact force from the air inlet guide. For this reason, the fastening bolt can absorb the impact force of the air inlet guide with sufficient elastic energy proportional to the square of the amount of elongation of the shank. Further, the fastening bolt can further absorb the impact force of the air inlet guide by performing plastic deformation in a case where the impact force of the air inlet guide exceeds an elastic limit. Accordingly, it is possible to prevent the air inlet guide from falling off from the mounting position due to breaking of the fastening bolt with respect to the impact force from the air inlet guide.

In this manner, according to the centrifugal compressor of the above aspect of the present invention, it is possible to prevent a problem in which the air inlet guide is thrown according to breaking or falling-off of the whole or a part of the impeller.

In the centrifugal compressor according to the above aspect, the centrifugal compressor may further include: a diffuser part which leads the fluid discharged from the discharge port, to the scroll chamber, and is mounted on an end portion in the direction of the axis line of the scroll part, and the fastening hole may be formed in the end portion in the direction of the axis line.

In this way, it is possible to make the shank of the fastening bolt have a sufficient length to reach the end portion in the direction of the axis line of the scroll part, on which the diffuser part is mounted. In this way, the shank can secure a sufficient amount of elongation in the direction of the axis line with respect to the impact force from the air inlet guide.

In the centrifugal compressor according to the above aspect, the scroll part may have a protrusion portion which protrudes from a portion forming the scroll chamber to the inner periphery side in the radial direction, and the fastening hole may be formed in the protrusion portion.

The protrusion portion is provided, whereby it is possible to reinforce the inner periphery side in the radial direction of the scroll part while securing a sufficient amount of elongation of the shank in the direction of the axis line with respect to the impact force from the air inlet guide.

In the centrifugal compressor according to the above aspect, a plurality of the fastening bolts may be provided, the fastening holes may be respectively formed at a plurality of locations around the axis line of the scroll part, and in each of the plurality of fastening bolts, the head thereof may be mounted on the end portion on the suction opening side of the air inlet guide and the tip of the shank may be fastened to each of the plurality of fastening holes.

In this way, a state is created where the fastening bolts are respectively disposed at the plurality of locations around the axis line of the downstream-side tubular portion and the downstream-side tubular portion is surrounded by the plurality of fastening bolts. In this way, even in a case where a gap is formed in the downstream-side tubular portion due to collision of a broken member with the downstream-side tubular portion and the broken member is thrown in the radial direction from the gap, the broken member is suppressed from being further thrown in the radial direction.

In the centrifugal compressor according to any one of the above, the fastening bolt may be formed of rolled steel.

The rolled steel has ductility leading to breakage after large plastic deformation, and therefore, even in a case where the impact force of the air inlet guide exceeds the elastic limit of the fastening bolt, the shank of the fastening bolt can be sufficiently plastically deformed to absorb the impact force of the air inlet guide.

According to another aspect of the present invention, there is provided a turbocharger including: the centrifugal compressor according to any one of the above; and a turbine which rotates around the axis line and is connected to the rotor shaft.

According to the turbocharger of this aspect, it is possible to prevent a problem in which the air inlet guide is thrown according to breaking or falling-off of the whole or a part of the impeller.

### Advantageous Effects of Invention

According to the present invention, it is possible to provide a centrifugal compressor in which it is possible to prevent a problem in which an air inlet guide is thrown according to breaking or falling-off of the whole or a part of an impeller, and a turbocharger provided with the centrifugal compressor.

### Brief Description of Drawings

Fig. 1 is a vertical cross-sectional view showing a turbocharger of a first embodiment.
Fig. 2 is an enlarged view of a main section of a centrifugal compressor shown in Fig. 1.
Fig. 3 is a cross-sectional view taken along line A-A and viewed in the direction of an arrow, of an air inlet guide and a fastening bolt shown in Fig. 1.
Fig. 4 is a diagram showing one process of a method of manufacturing the centrifugal compressor.
Fig. 5 is an enlarged view of a main section of a centrifugal compressor of a second embodiment.

### Description of Embodiments

### [First Embodiment]

Hereinafter, a turbocharger of a first embodiment of the present invention will be described with reference to the drawings.

A turbocharger 100 of this embodiment is a device for increasing the pressure of gas (for example, air) which is supplied to a ship diesel engine (internal combustion engine) which is used in a ship, to a certain pressure (for example, atmospheric pressure) or more, thereby enhancing the combustion efficiency of the ship diesel engine.

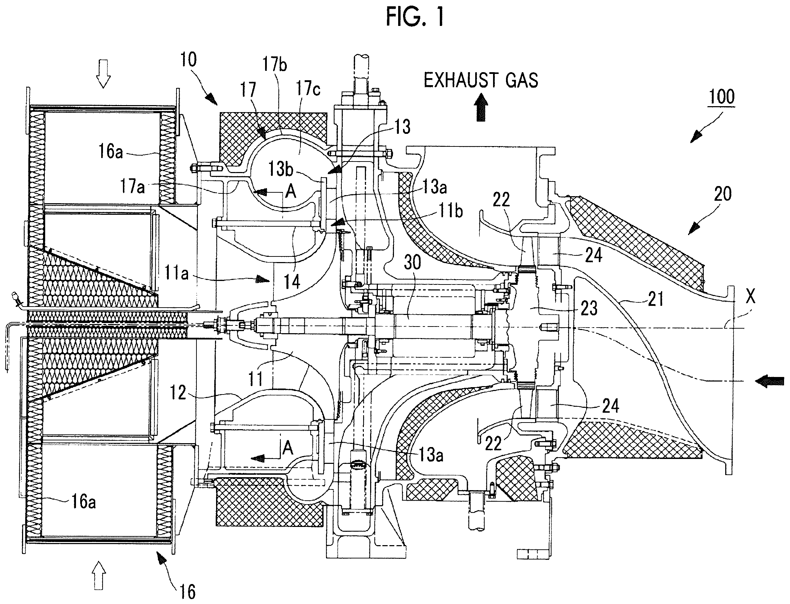

As shown in Fig. 1, the turbocharger 100 of this embodiment is provided with a centrifugal compressor 10, a turbine 20, and a silencer. Each of the centrifugal compressor 10 and the turbine 20 is connected to a rotor shaft 30.

The turbine 20 is provided with a turbine housing 21, turbine blades 22, a turbine disk 23, and a turbine nozzle 24. The turbine housing 21 is a hollow tubular member which is disposed around an axis line X, and accommodates the turbine blades 22, the turbine disk 23, and the turbine nozzle 24 inside thereof. Exhaust gas which is discharged from the ship diesel engine flows into the turbine housing 21 along an arrow shown on the right side of Fig. 1.

The exhaust gas led to the turbine housing 21 passes through the turbine nozzle 24 and is led to the turbine blades 22. The turbine blades 22 are mounted at regular intervals around the axis line on the outer peripheral surface of the circular plate-shaped turbine disk 23 fixed to the rotor shaft 30. The exhaust gas which has performed static pressure expansion passes through the turbine blades 22, whereby a rotating force around the axis line X is applied to the turbine disk 23. The rotating force serves as power which rotates the rotor shaft 30, and rotates an impeller 11 connected to the rotor shaft 30 around the axis line X.

The centrifugal compressor 10 is a device for compressing gas flowing in from the outside of the turbocharger 100 and supplying the compressed gas (hereinafter referred to as compressed gas) to a scavenging trunk (not shown) which communicates with the inside of a cylinder liner (not shown) configuring the ship diesel engine.

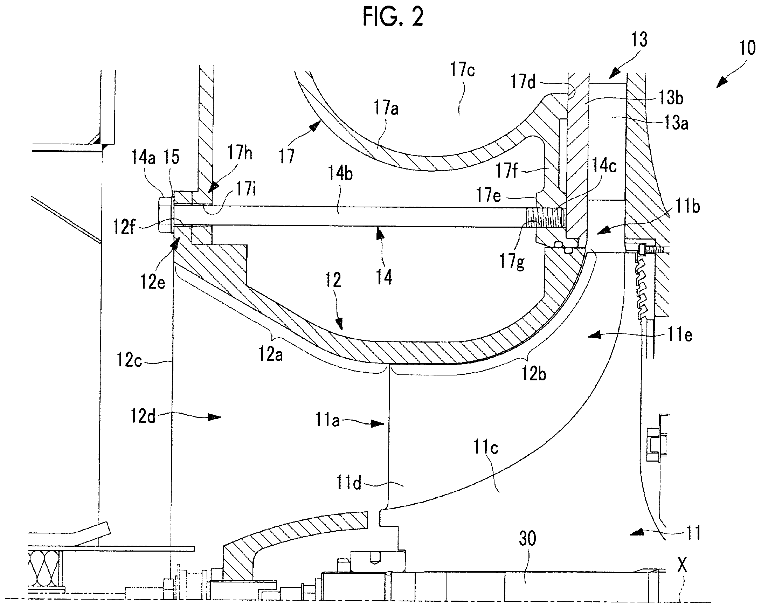

As shown in Figs. 1 and 2, the centrifugal compressor 10 is provided with the impeller 11, an air inlet guide 12, a diffuser part 13, a fastening bolt 14, a washer 15, and a scroll part 17.

As shown in Fig. 2, the impeller 11 is mounted on the rotor shaft 30 extending along the axis line X and rotates around the axis line X according to the rotation of the rotor shaft 30 around the axis line X. The impeller 11 rotates around the axis line X, thereby compressing gas flowing in from an intake port 11a, and then discharging the compressed gas from a discharge port 11b.

The impeller 11 is provided with a hub 11c which is mounted on the rotor shaft 30, a blade 11d which is mounted on the outer peripheral surface of the hub 11c, and a flow path 11e. A space which is defined by the outer peripheral surface of the hub 11c and the inner peripheral surface of the air inlet guide 12 is provided in the impeller 11, and the space is partitioned into a plurality of spaces by a plurality of blades 11d. Further, the impeller 11 applies a centrifugal force in a radial direction to gas flowing in from the intake port 11a along a direction of the axis line X, thereby discharging the gas in a direction (a radial direction of the impeller 11) orthogonal to the direction of the axis line X and making the compressed gas discharged to the discharge port 11b flow into the diffuser part 13.

The air inlet guide 12 accommodates the impeller 11 and extends along the direction of the axis line X of the rotor shaft 30. The air inlet guide 12 forms, along with the impeller 11, the flow path 11e which guides gas flowing in from the intake port 11a along the axis line X, in the radial direction orthogonal to the axis line X, thereby leading the gas to the discharge port 11b.

The air inlet guide 12 is a member made by integrally forming an upstream-side tubular portion 12a which forms a suction flow path 12d that leads gas flowing in from a suction opening 12c of one end of the rotor shaft 30 in the direction of the axis line X, to the intake port 11a, and a downstream-side tubular portion 12b which forms the flow path 11e (a compression flow path) that compresses the gas flowing in from the intake port 11a and leads the compressed gas to the discharge port 11b.

The diffuser part 13 is a member for leading the compressed gas discharged from the discharge port 11b, to a scroll chamber 17c. The diffuser part 13 has a diffuser blade 13a and a diffuser disk 13b.

The diffuser blade 13a is a blade-shaped member which is disposed on the downstream side of the discharge port 11b of the impeller 11, and forms a flow path which leads the compressed gas from the discharge port 11b to the scroll chamber 17c.

The diffuser blade 13a is provided at each of a plurality of locations along a circumferential direction of the circular ring-shaped diffuser disk 13b which is disposed coaxially with the rotor shaft 30. The diffuser blades 13a are provided so as to surround the discharge port 11b for the compressed gas, which is provided on the entire circumference of the impeller 11. The diffuser disk 13b is mounted on an inner periphery-side end portion 17e of an inner scroll casing 17a by a fastening bolt (not shown).

The diffuser part 13 converts kinetic energy (dynamic pressure) applied to the compressed gas to pressure energy (static pressure) by reducing the flow velocity of the compressed gas discharged from the discharge port 11b of the impeller 11. The compressed gas with the flow velocity reduced when passing through the diffuser part 13 flows into the scroll chamber 17c which communicates with the diffuser part 13. A working fluid which has flowed into the scroll chamber 17c is discharged to a discharge pipe (not shown).

The fastening bolt 14 is a fastener for mounting the air inlet guide 12 on the scroll part 17. The fastening bolt 14 has a head 14a and a shank 14b. A male screw which is fastened to the inner periphery-side end portion 17e (an end portion) of the inner scroll casing 17a (described later) is formed on the outer peripheral surface of a tip 14c of the shank 14b.

The washer 15 is an annular member which is inserted between an end portion 12e of the air inlet guide 12 and the head 14a of the fastening bolt 14.

The mounting of the air inlet guide 12 on the scroll part 17 by the fastening bolt 14 will be described later.

It is desirable that the fastening bolt 14 is formed of a metal material having high strength and high breaking elongation. In a case where a metal material forming the fastening bolt 14 is an iron and steel material, rolled steel for a general structure (JIS G 3101; ASTM A283) called SS400, or chrome molybdenum steel such as SCM435 is preferable. It is preferable to use a titanium alloy except for the iron and steel material.

A silencer 16 is a device for reducing a level of noise which is generated in the centrifugal compressor 10. As shown in Fig. 1, the silencer 16 forms a flow path which leads gas flowing in from a direction orthogonal to the axis line X, to the suction opening 12c of the air inlet guide 12. A sound-absorbing material 16a is disposed around the flow path. Some of noise which is generated in the centrifugal compressor 10 is absorbed by the sound-absorbing material 16a, and thus a level of the noise is reduced.

The scroll part 17 is a device into which the compressed gas discharged from the discharge port 11b flows and which converts kinetic energy (dynamic pressure) applied to the compressed gas to pressure energy (static pressure). The scroll part 17 is disposed further toward the outer periphery side in the radial direction orthogonal to the direction of the axis line X than is the air inlet guide 12.

As shown in Figs. 1 and 2, the scroll part 17 is provided with the inner scroll casing 17a and an outer scroll casing 17b. The inner scroll casing 17a is provided with an outer periphery-side end portion 17d (an end portion), the inner periphery-side end portion 17e (an end portion), and a connection portion 17f (an end portion) connecting these end portions. Each of the outer periphery-side end portion 17d and the inner periphery-side end portion 17e is an annular member extending around the axis line X of the rotor shaft 30.

A fastening hole 17g to which the tip 14c of the fastening bolt 14 is fastened is formed in the inner periphery-side end portion 17e. A female screw is formed in the inner peripheral surface of the fastening hole 17g so as to be fastened to the male screw formed on the tip 14c of the fastening bolt 14.

The respective portions configuring the scroll part 17 are integrally formed by metal members. The scroll chamber 17c into which the compressed gas flows is formed by the inner scroll casing 17a and the outer scroll casing 17b. As shown in Fig. 1, the scroll part 17 is mounted on the silencer 16 by fastening bolts. The scroll part 17 is provided with an end portion 17h in which a through-hole 17i, into which the fastening bolt 14 is inserted, is formed.

Each of the air inlet guide 12 described above and the scroll part 17 is made of a metal member manufactured by casting in order to form a complicated shape. As the metal member, for example, cast iron which is a Fe-C-based alloy containing iron as its main component and containing 2% or more of carbon is used. As long as it is cast iron, it is possible to use various materials such as gray cast iron. However, it is preferable to use ductile cast iron (FCD: Ferrum Casting Ductile) in which graphite in a base structure is spheroidized.

Next, the mounting of the air inlet guide 12 on the scroll part 17 will be described.

As shown in Fig. 2, a through-hole 12f extending in the direction of the axis line X is formed in the end portion 12e of the air inlet guide 12. Further, the through-hole 17i extending in the direction of the axis line X is formed in the end portion 17h of the scroll part 17. Further, the fastening hole 17g extending in the direction of the axis line X is formed in the inner periphery-side end portion 17e of the inner scroll casing 17a.

As shown in Fig. 2, the through-hole 12f, the through-hole 17i, and the fastening hole 17g are disposed coaxially. The fastening bolt 14 is in a state where the shank 14b is inserted into the through-hole 12f and the through-hole 17i and the tip 14c of the shank 14b is fastened to the fastening hole 17g. Further, the head 14a of the fastening bolt 14 and the end portion 12e of the air inlet guide 12 are fixed in a state of sandwiching the washer 15 therebetween.

As shown in Fig. 2, the end portion 17h of the scroll part 17 is disposed on the discharge port 11b side along the axis line X of the end portion 12e of the air inlet guide 12. The end portion 17h of the scroll part 17 restricts the movement of the air inlet guide 12 to the discharge port 11b side.

On the other hand, the head 14a of the fastening bolt 14 is disposed on the silencer 16 side along the axis line X of the end portion 12e of the air inlet guide 12. The head 14a of the fastening bolt 14 restricts the movement of the air inlet guide 12 to the silencer 16 side.

In this manner, in the fastening bolt 14, the head 14a is mounted on the end portion 12e on the suction opening 12c side of the air inlet guide 12 and the tip 14c of the shank 14b is fastened to the fastening hole 17g of the scroll part 17. The fastening bolt 14 is fastened to the scroll part 17, whereby the position of the air inlet guide 12 in the direction of the axis line X is fixed.

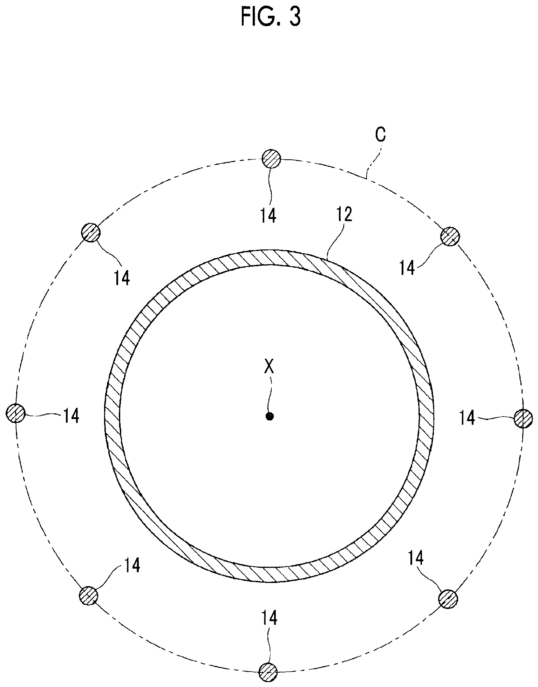

As shown in Fig. 3 (a cross-sectional view taken along line A-A and viewed in the direction of an arrow, of the air inlet guide 12 and the fastening bolt 14 shown in Fig. 1), the centrifugal compressor 10 is provided with a plurality of fastening bolts 14 which are disposed on a circumference C centered on the axis line X, so as to surround the air inlet guide 12 around the axis line X. A plurality of fastening holes 17g are respectively formed at a plurality of locations (positions corresponding to the fastening bolts 14) around the axis line X of the inner periphery-side end portion 17e of the inner scroll casing 17a. In each of the plurality of fastening bolts 14, the head 14a is mounted on the end portion 12e on the suction opening 12c side of the air inlet guide 12 and the tip 14c of the shank 14b is fastened to each of the plurality of fastening holes 17g.

Fig. 3 is an example in which the plurality of fastening bolts 14 are evenly disposed at central angles of 45° at eight locations on the circumference C. In addition to this, the plurality of fastening bolts 14 may be evenly disposed at central angles of 30° at twelve locations on the circumference C. Further, the plurality of fastening bolts 14 may be disposed at angle of other central angles on the circumference C, and some of the fastening bolts may be disposed on a circumference different from the circumference C. Alternatively, the plurality of fastening bolts may be disposed at arbitrary intervals, rather than equal intervals, on the circumference C.

Next, a method for manufacturing the centrifugal compressor of this embodiment will be described.

In the method for manufacturing the centrifugal compressor 10 of this embodiment, the centrifugal compressor 10 is manufactured by the following processes.

In a first process, the impeller 11 which compresses air flowing in from the intake port 11a and then discharges the compressed air from the discharge port 11b is mounted on the rotor shaft 30.

In a second process, the scroll part 17 forming the scroll chamber 17c into which the compressed air discharged from the discharge port 11b flows is mounted.

In a third process, the air inlet guide 12 is mounted so as to accommodate the impeller 11 and extend in the direction of the axis line X of the rotor shaft 30. By the third process, the scroll part 17 is disposed further toward the outer periphery side in the radial direction of the rotor shaft 30 than is the air inlet guide 12.

In a fourth process, the diffuser part 13 is mounted on the inner scroll casing 17a so as to lead the compressed air discharged from the discharge port 11b, to the scroll chamber 17c, and be supported on the outer periphery-side end portion 17d and the inner periphery-side end portion 17e in the direction of the axis line X in the inner scroll casing 17a.

By the above processes, the centrifugal compressor 10 of this embodiment is manufactured.

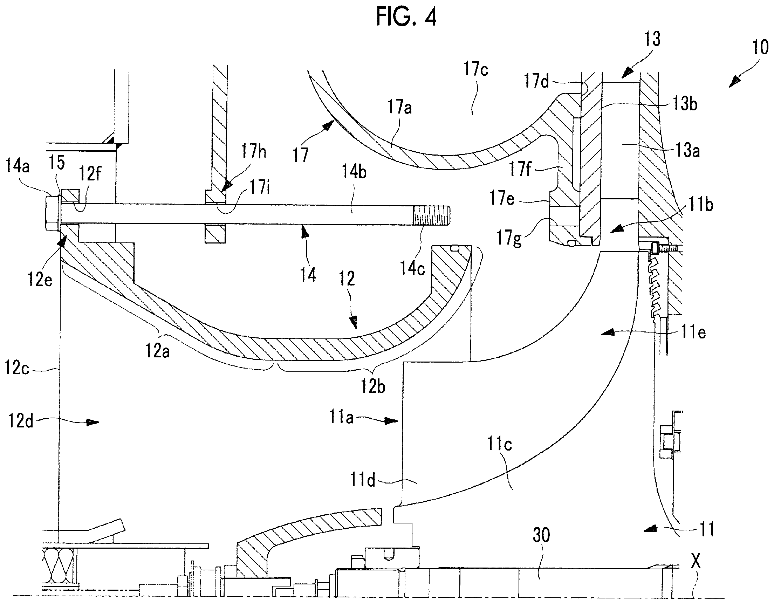

Fig. 4 is a diagram showing the third process that is one process of the method of manufacturing the centrifugal compressor 10. As shown in Fig. 4, in the third process of mounting the air inlet guide 12, a state is created where the shank 14b of the fastening bolt 14 is inserted into the through-hole 12f of the end portion 12e of the air inlet guide 12. Thereafter, the tip 14c of the shank 14b is inserted into the through-hole 17i of the scroll part 17.

As shown in Fig. 3, in this embodiment, the fastening bolts 14 are respectively disposed at a plurality of locations on the circumference C centered on the axis line X. For this reason, the tips 14c of the plurality of fastening bolts 14 are respectively inserted into the plurality of through-holes 17i, whereby a state where the central axis of the air inlet guide 12 coincides with the axis line X of the rotor shaft 30 is maintained.

In a state where the impeller 11 is accommodated in the air inlet guide 12, a state where the inner peripheral surface of the air inlet guide 12 and the impeller 11 are close to each other (for example, a state of being close to each other by several mm) is created. For this reason, when moving the air inlet guide 12 to the position, at which it accommodates the impeller 11, by moving the air inlet guide 12 along the axis line X, it is necessary to prevent the inner peripheral surface of the air inlet guide 12 and the impeller 11 from coming into contact with each other.

In this embodiment, it is possible to move the air inlet guide 12 along the axis line X while maintaining a state where the central axis of the air inlet guide 12 coincides with the axis line X of the rotor shaft 30, and therefore, it is possible to easily perform the mounting of the air inlet guide 12.

Next, an operation and the effects which the turbocharger 100 of this embodiment exhibits will be described.

According to the centrifugal compressor 10 of this embodiment, in a case where the whole or a part of the impeller 11 breaks or falls off, the broken member is thrown in the radial direction orthogonal to the axis line X, thereby colliding with the air inlet guide 12. An impact force which is applied to the air inlet guide 12 due to the collision of the broken member with the air inlet guide 12 has a component in the radial direction and a component in the direction of the axis line X of the rotor shaft 30. The component in the direction of the axis line X of the impact force acts in a direction separating the air inlet guide 12 from the scroll part 17. The head 14a of the fastening bolt 14 mounting the air inlet guide 12 on the scroll part 17 is mounted on the end portion 12e on the suction opening 12c side of the air inlet guide 12. For this reason, the impact force in the direction separating the air inlet guide 12 from the scroll part 17 is transmitted to the head 14a of the fastening bolt 14 through the end portion 12e on the suction opening 12c side of the air inlet guide 12.

The tip 14c of the shank 14b of the fastening bolt 14 is fastened to the fastening hole 17g formed in the inner scroll casing 17a which is located on the outer periphery side of the downstream-side tubular portion 12b of the air inlet guide 12. The head 14a of the fastening bolt 14 is mounted on the end portion 12e of the upstream-side tubular portion 12a, and therefore, the head 14a and the tip 14c of the shank 14b of the fastening bolt 14 are separated from each other by at least an amount corresponding to the length of the upstream-side tubular portion 12a in the direction of the axis line X. For this reason, the impact force transmitted to the head 14a of the fastening bolt 14 acts on the tip 14c of the shank 14b separated from the head 14a. Then, tensile stress along the direction of the axis line X acts on the shank 14b of the fastening bolt 14 due to the impact force acting on the head 14a and the tip 14c of the shank 14b of the fastening bolt 14.

The shank 14b of the fastening bolt 14 has the entire length corresponding to the length of the air inlet guide 12 in the direction of the axis line X, and therefore, the shank 14b can secure a sufficient amount of elastic deformation elongation in the direction of the axis line X with respect to the impact force from the air inlet guide 12. For this reason, the fastening bolt 14 can absorb the impact force of the air inlet guide 12 with sufficient elastic energy proportional to the square of the amount of elongation of the shank 14b.

Here, a comparative example made such that the tip of a fastening bolt is fastened to the end portion 17h of the scroll part 17 is considered. The length of the fastening bolt 14 of this embodiment is about ten times the length of the fastening bolt of the comparative example, for example. In this case, in a case where the same impact force is applied, the amount of elongation of the fastening bolt 14 of this embodiment is about ten times that of the fastening bolt of the comparative example. For this reason, an impact force that can be absorbed by the fastening bolt 14 of this embodiment is about 100 times as large as the squared elongation amount, as compared with an impact force that can be absorbed by the fastening bolt of the comparative example.

Further, the fastening bolt 14 can further absorb the impact force of the air inlet guide 12 by performing plastic deformation in a case where the impact force of the air inlet guide 12 exceeds an elastic limit. Accordingly, it is possible to prevent the air inlet guide 12 from falling off from the mounting position due to breaking of the fastening bolt 14 with respect to the impact force from the air inlet guide 12.

In this manner, according to the centrifugal compressor 10 of this embodiment, it is possible to prevent a problem in which the air inlet guide 12 is thrown according to breaking or falling-off of the whole or a part of the impeller 11.

The centrifugal compressor 10 of this embodiment has the diffuser part 13 which leads the compressed gas discharged from the discharge port 11b, to the scroll chamber 17c, and is mounted on the inner periphery-side end portion 17e in the direction of the axis line X of the inner scroll casing 17a, and the fastening hole 17g is formed in the inner periphery-side end portion 17e.

In this way, it is possible to make the shank 14b of the fastening bolt 14 have a sufficient length to reach the inner periphery-side end portion 17e in the direction of the axis line X of the inner scroll casing 17a, on which the diffuser part 13 is mounted. In this way, the shank 14b can secure a sufficient amount of elongation in the direction of the axis line X with respect to the impact force from the air inlet guide 12. Further, except for changes in that the length of the shank 14b of the fastening bolt 14 is increased and the fastening hole 17g is provided in the inner scroll casing 17a, the other configurations of the centrifugal compressor 10 do not need to be greatly changed from the configurations of the related art.

The centrifugal compressor 10 of this embodiment is provided with the plurality of fastening bolts 14, and the fastening holes 17g are respectively formed at a plurality of locations around the axis line X of the inner scroll casing 17a. Further, in each of the plurality of fastening bolts 14, the head 14a is mounted on the end portion 12e on the suction opening 12c side of the air inlet guide 12 and the tip 14c of the shank 14b is fastened to each of the plurality of fastening holes 17g.

In this way, a state is created where the fastening bolts 14 are respectively disposed at a plurality of locations around the axis line X of the downstream-side tubular portion 12b and the downstream-side tubular portion 12b is surrounded by the plurality of fastening bolts 14. In this way, even in a case where a gap is formed in the downstream-side tubular portion 12b due to collision of a broken member with the downstream-side tubular portion 12b and the broken member is thrown in the radial direction from the gap, the broken member is suppressed from being further thrown in the radial direction.

In the centrifugal compressor 10 of this embodiment, it is desirable that the fastening bolt 14 is formed of a metal material having high strength and high breaking elongation.

In a case where the fastening bolt 14 is formed of an iron and steel material, it is preferable to use rolled steel for a general structure. The rolled steel for a general structure has ductility leading to breakage after large plastic deformation. For this reason, even in a case where the impact force of the air inlet guide 12 exceeds the elastic limit of the fastening bolt 14, the shank 14b of the fastening bolt 14 can be sufficiently plastically deformed to absorb the impact force of the air inlet guide 12.

### [Second Embodiment]

Hereinafter, a turbocharger of a second embodiment of the present invention will be described with reference to the drawings.

The second embodiment is a modification example of the first embodiment, and with respect to the same configurations as those in the first embodiment except for a case as specifically described in the following, description thereof is omitted.

In the turbocharger of the first embodiment, in the centrifugal compressor 10, the fastening bolt 14 mounting the air inlet guide 12 on the scroll part 17 has the entire length corresponding to the length of the air inlet guide 12 in the direction of the axis line X. In contrast, in the turbocharger of the second embodiment, in a centrifugal compressor 10', the fastening bolt 14' mounting the air inlet guide 12 on the scroll part 17 is shorter than the length of the air inlet guide 12 in the direction of the axis line X.

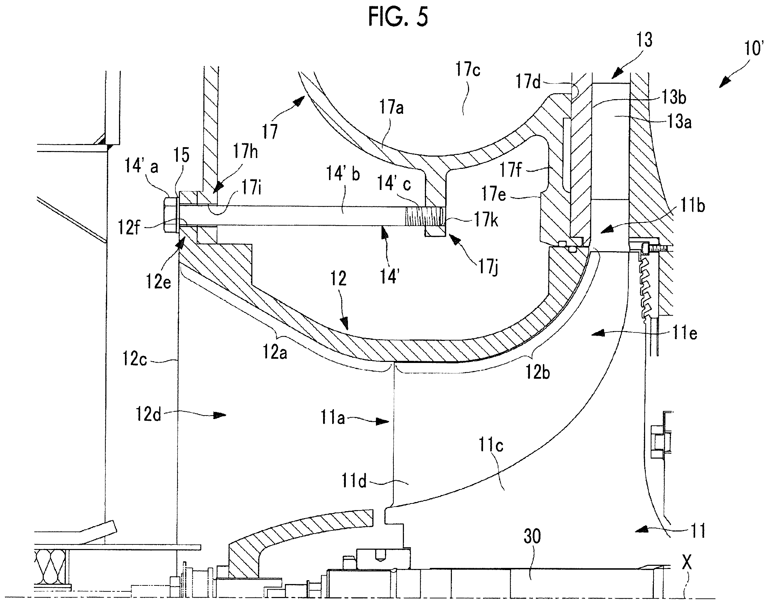

As shown in Fig. 5, in the turbocharger of this embodiment, the scroll part 17 of the centrifugal compressor 10' has a protrusion portion 17j which protrudes from a portion forming the scroll chamber 17c to the inner periphery side in the radial direction orthogonal to the axis line X. The protrusion portion 17j is integrally molded as a portion of the inner scroll casing 17a by casting.

A fastening hole 17k extending in the direction of the axis line X is formed in the protrusion portion 17j. A female screw is formed in the inner peripheral surface of the fastening hole 17k.

A fastening bolt 14' is a fastener for mounting the air inlet guide 12 on the scroll part 17. The fastening bolt 14' has a head 14'a and a shank 14'b. A male screw which is fastened to the fastening hole 17k formed in the protrusion portion 17j of the inner scroll casing 17a is formed on the outer peripheral surface of a tip 14'c of the shank 14'b.

As shown in Fig. 5, the through-hole 12f, the through-hole 17i, and the fastening hole 17k are disposed coaxially. The fastening bolt 14' is in a state where the shank 14'b is inserted into the through-hole 12f and the through-hole 17i and the tip 14'c of the shank 14'b is fastened to the fastening hole 17k. Further, the head 14'a of the fastening bolt 14' and the end portion 12e of the air inlet guide 12 are fixed in a state of sandwiching the washer 15 therebetween.

As shown in Fig. 5, the end portion 17h of the scroll part 17 is disposed on the discharge port 11b side along the axis line X of the end portion 12e of the air inlet guide 12. The end portion 17h of the scroll part 17 restricts the movement of the air inlet guide 12 to the discharge port 11b side.

On the other hand, the head 14'a of the fastening bolt 14' is disposed on the silencer 16 side along the axis line X of the end portion 12e of the air inlet guide 12. The head 14'a of the fastening bolt 14' restricts the movement of the air inlet guide 12 to the silencer 16 side.

In this manner, in the fastening bolt 14', the head 14'a is mounted on the end portion 12e on the suction opening 12c side of the air inlet guide 12 and the tip 14'c of the shank 14'b is fastened to the fastening hole 17k of the scroll part 17. The fastening bolt 14' is fastened to the scroll part 17, whereby the position of the air inlet guide 12 in the direction of the axis line X is fixed.

In this embodiment, similar to the first embodiment, the centrifugal compressor 10' is provided with the plurality of fastening bolts 14' which are disposed on the circumference C centered on the axis line X, so as to surround the air inlet guide 12 around the axis line X.

It is favorable if the protrusion portion 17j is provided at each of a plurality of locations at which the plurality of fastening bolts 14' are respectively disposed. Further, the protrusion portion 17j may be formed in an annular shape so as to extend around the axis line X without a cut.

The position of the protrusion portion 17j in the direction of the axis line X can be set to be an arbitrary position on the outer periphery side of the downstream-side tubular portion 12b of the air inlet guide 12. The arbitrary position is within the range of the length of the impeller 11 in the direction of the axis line X. The protrusion portion 17j is disposed on the outer periphery side of the downstream-side tubular portion 12b, whereby in a case where a broken member which is thrown in the radial direction breaks the air inlet guide 12, due to the fastening bolt 14', it is possible to prevent the broken member from being further thrown to the outside.

In the centrifugal compressor 10' of this embodiment described above, the inner scroll casing 17a has the protrusion portion 17j which protrudes from a portion forming the scroll chamber 17c to the inner periphery side in the radial direction, and the fastening hole 17k is formed in the protrusion portion 17j.

The protrusion portion 17j is provided, whereby it is possible to reinforce the inner periphery side in the radial direction of the inner scroll casing 17a while securing a sufficient amount of elongation of the shank 14'b in the direction of the axis line X with respect to the impact force from the air inlet guide 12. In particular, in a case where the protrusion portion 17j is formed in an annular shape so as to extend around the axis line X without a cut, it is possible to sufficiently reinforce the inner periphery side in the radial direction of the inner scroll casing 17a. Reference Signs List

10, 10': centrifugal compressor
11: impeller
11a: intake port
11b: discharge port
11e: flow path (compression flow path)
12: air inlet guide
12a: upstream-side tubular portion
12b: downstream-side tubular portion
12c: suction opening
12d: suction flow path
12e: end portion
13: diffuser part
14, 14': fastening bolt
14a, 14'a: head
14b, 14'b: shank
14c, 14'c: tip
15: washer
17: scroll part
17a: inner scroll casing
17b: outer scroll casing
17c: scroll chamber
17d: outer periphery-side end portion
17e: inner periphery-side end portion
17f: connection portion
17g: fastening hole
17h: end portion
17j: protrusion portion
17k: fastening hole
30: rotor shaft
100: turbocharger
X: axis line

## Claims

1. A centrifugal compressor (10) comprising:
an impeller (11) which is mounted on a rotor shaft (30) and configured to compresses a fluid flowing in from an intake port (11a) and discharge a compressed fluid from a discharge port (11b);
an air inlet guide (12) which accommodates the impeller (11), extends in a direction of an axis line of the rotor shaft (30), and is provided with a suction opening (12c) which is configured to suction the fluid;
a scroll part (17) which is disposed further toward the outer periphery side in a radial direction orthogonal to the direction of the axis line than is the air inlet guide (12) and forms a scroll chamber (17c) into which the compressed fluid discharged from the discharge port can flow; and
a fastening bolt (14, 14') which mounts the air inlet guide (12) on the scroll part (17) and is provided with a head (14a, 14'a) and a shank (14b, 14b'),
wherein the scroll part (17) is provided with an inner periphery-side end portion (17e, 17j) provided on the discharge port (11b) side, and an end portion (17h) provided on the suction opening (12c) side such that it is spaced-apart in the direction of the axis line from the inner periphery-side end portion (17e, 17j),
a fastening hole (17g, 17k) to which a tip (14c, 14'c) of the shank (14b, 14'b) of the fastening bolt (14, 14') is fastened is formed in the inner periphery-side end portion (17e, 17j),
a through-hole (17i) into which the shank (14b, 14'b) of the fastening bolt (14, 14') is inserted is formed in the end portion (17h) of the scroll (17) provided on the suction opening (12c) side, and
wherein the head (14a, 14'a) of the fastening bolt (14, 14'), is mounted on an end portion (12e) on the air inlet guide (12) on the side of the suction opening (12c), and the tip (14c, 14c') of the shank (14b, 14'b) is fastened to the fastening hole (17g, 17k).

2. The centrifugal compressor (10) according to Claim 1, further comprising:
a diffuser part (13) configured to lead the fluid discharged from the discharge port (11b), to the scroll chamber (17c), and is mounted on the inner periphery-side end portion (17e, 17j) of the scroll part (17).

3. The centrifugal compressor (10) according to Claim 1, wherein the scroll part (17) has a protrusion portion (17j) which protrudes from a portion forming the scroll chamber (17c) to the inner periphery side in the radial direction, and
the fastening hole (17k) is formed in the protrusion portion (17j).

4. The centrifugal compressor (10) according to any one of Claims 1 to 3, wherein a plurality of the fastening bolts (14, 14') are provided,
the fastening holes (17g, 17k) are respectively formed at a plurality of locations around the axis line of the inner periphery-side end portion (17e, 17j), and
in each of the plurality of fastening bolts (14, 14'), the head (14a, 14'a) thereof is mounted on the end portion (12e) on the suction opening (12c) side of the air inlet guide (12) and the tip (14c, 14c') of the shank (14b, 14'b) is fastened to each of the plurality of fastening holes (17g, 17k).

5. The centrifugal compressor (10) according to any one of Claims 1 to 4, wherein the fastening bolt (14, 14') is formed of rolled steel.

6. A turbocharger (100) comprising:
the centrifugal compressor (10) according to any one of Claims 1 to 5; and
a turbine (20) which is configured to rotate around the axis line and is connected to the rotor shaft (30).

## Patentansprüche

1. Kreiselverdichter (10), umfassend:
ein Laufrad (11), das an einer Rotorwelle (30) montiert ist und konfiguriert ist, um ein von einer Einlassöffnung (11a) einströmendes Fluid zu verdichten und ein verdichtetes Fluid von einer Abgabeöffnung (11b) abzugeben;
eine Lufteinlassführung (12), die das Laufrad (11) aufnimmt, sich in einer Richtung einer Achsenlinie der Rotorwelle (30) erstreckt und mit einer Ansaugöffnung (12c) versehen ist, die zum Ansaugen des Fluids konfiguriert ist;
ein Spiralteil (17), das in einer radialen Richtung orthogonal zur Richtung der Achsenlinie weiter zur äußeren Umfangsseite hin angeordnet ist als die Lufteinlassführung (12) und eine Spiralkammer (17c) bildet, in die das von der Abgabeöffnung abgegebene verdichtete Fluid fließen kann; und
eine Befestigungsschraube (14, 14'), die die Lufteinlassführung (12) an dem Spiralteil (17) montiert und mit einem Kopf (14a, 14'a) und einem Schaft (14b, 14b') versehen ist,
wobei das Spiralteil (17) mit einem Endabschnitt (17e, 17j) der Innenumfangsseite versehen ist, der auf der Seite der Abgabeöffnung (11b) vorgesehen ist, und einem Endabschnitt (17h), der auf der Seite der Ansaugöffnung (12c) vorgesehen ist, sodass er in Richtung der Achsenlinie von dem Endabschnitt (17e, 17j) der Innenumfangsseite beabstandet ist,
ein Befestigungsloch (17g, 17k), an dem eine Spitze (14c, 14'c) des Schafts (14b, 14'b) der Befestigungsschraube (14, 14') befestigt ist, ist in dem Endabschnitt der Innenumfangsseite ausgebildet (17e, 17j),
ein Durchgangsloch (17i), in das der Schaft (14b, 14'b) der Befestigungsschraube (14, 14') eingeführt wird, ist in dem Endabschnitt (17h) der Spirale (17) ausgebildet, der auf der Seite der Ansaugöffnung (12c) vorgesehen ist, und
wobei der Kopf (14a, 14'a) der Befestigungsschraube (14, 14') an einem Endabschnitt (12e) an der Lufteinlassführung (12) auf der Seite der Ansaugöffnung (12c) montiert ist, und die Spitze (14c, 14c') des Schafts (14b, 14'b) an dem Befestigungsloch (17g, 17k) befestigt ist.

2. Kreiselkompressor (10) nach Anspruch 1, weiterhin umfassend:
einen Diffusorteil (13), der konfiguriert ist, um von der Abgabeöffnung (11b) abgegebene Fluid zu der Spiralkammer (17c) zu leiten und an dem Endabschnitt (17e, 17j) der Innenumfangsseite des Spiralteils (17) montiert ist.

3. Kreiselverdichter (10) nach Anspruch 1, wobei das Spiralteil (17) einen Vorsprungsabschnitt (17j) aufweist, der von einem Abschnitt, der die Spiralkammer (17c) bildet, zu der Innenumfangsseite in der Radialrichtung vorsteht, und das Befestigungsloch (17k) in dem Vorsprungabschnitt (17j) ausgebildet ist.

4. Kreiselverdichter (10) nach einem der Ansprüche 1 bis 3, wobei eine Vielzahl der Befestigungsschrauben (14, 14') vorgesehen sind,
wobei die Befestigungslöcher (17g, 17k) jeweils an einer Vielzahl von Stellen um die Achsenlinie des Endabschnitts (17e, 17j) der Innenumfangsseite ausgebildet sind, und
in jedem der Vielzahl von Befestigungsschrauben (14, 14') der Kopf (14a, 14'a) davon an dem Endabschnitt (12e) auf der Seite der Ansaugöffnung (12c) der Lufteinlassführung (12) montiert ist und die Spitze (14c, 14c') des Schafts (14b, 14'b) an jedem der Vielzahl von Befestigungslöcher (17g, 17k) befestigt ist.

5. Kreiselverdichter (10) nach einem der Ansprüche 1 bis 4, wobei die Befestigungsschraube (14, 14') aus Walzstahl gebildet ist.

6. Auflader (100), umfassend:
den Kreiselverdichter (10) nach einem der Ansprüche 1 bis 5; und
eine Turbine (20), die konfiguriert ist, um sich um die Achsenlinie zu drehen und die mit der Rotorwelle (30) verbunden ist.

## Revendications

1. Compresseur centrifuge (10) comprenant :
une roue à aubes (11) qui est montée sur un arbre de rotor (30) et configurée pour comprimer un fluide s'écoulant en provenance d'un orifice d'entrée (11a) et pour refouler un fluide comprimé en provenance d'un orifice de refoulement (11b) ;
un guide d'entrée d'air (12) qui loge la roue à aubes (11), s'étend dans une direction d'une ligne d'axe de l'arbre de rotor (30), et est muni d'une ouverture d'aspiration (12c) qui est configurée pour aspirer le fluide ;
une partie volute (17) qui est disposée davantage vers le côté périphérie extérieure dans une direction radiale orthogonale à la direction de la ligne d'axe que ne l'est le guide d'entrée d'air (12) et forme une chambre à volute (17c) dans laquelle le fluide comprimé refoulé depuis l'orifice de refoulement peut s'écouler ; et
un boulon de fixation (14, 14') qui monte le guide d'entrée d'air (12) sur la partie volute (17) et est muni d'une tête (14a, 14'a) et d'une tige (14b, 14b'),
dans lequel la partie volute (17) est munie d'une portion d'extrémité côté périphérie intérieure (17e, 17j) prévue sur le côté orifice de refoulement (11b), et une portion d'extrémité (17h) prévue sur le côté ouverture d'aspiration (12c) de sorte qu'elle est espacée dans la direction de la ligne d'axe depuis la portion d'extrémité côté périphérie intérieure (17e, 17j),
un trou de fixation (17g, 17k) auquel un bout (14, 14'c) de la tige (14b, 14'b) du boulon de fixation (14, 14') est fixé est formé dans la portion d'extrémité côté périphérie intérieure (17e, 17j),
un trou traversant (17i) dans lequel la tige (14b, 14'b) du boulon de fixation (14, 14') est insérée est formé dans la portion d'extrémité (17h) de la volute (17) prévue sur le côté ouverture d'aspiration (12c), et
dans lequel la tête (14a, 14'a) du boulon de fixation (14, 14') est montée sur une portion d'extrémité (12e) du guide d'entrée d'air (12) sur le côté de l'ouverture d'aspiration (12c), et le bout (14c, 14c') de la tige (14b, 14'b) est fixé au trou de fixation (17g, 17k).

2. Compresseur centrifuge (10) selon la revendication 1, comprenant en outre :
une partie diffuseur (13) configurée pour mener le fluide refoulé en provenance de l'orifice de refoulement (11b), jusqu'à la chambre à volute (17c) et est montée sur la portion d'extrémité côté périphérie intérieure (17e, 17j) de la partie volute (17).

3. Compresseur centrifuge (10) selon la revendication 1,
dans lequel la partie volute (17) a une portion formant protubérance (17j) qui dépasse d'une portion formant la chambre à volute (17c) jusqu'au côté périphérie intérieure dans la direction radiale, et le trou de fixation (17k) est formé dans la portion formant protubérance (17j).

4. Compresseur centrifuge (10) selon l'une quelconque des revendications 1 à 3, dans lequel une pluralité de boulons de fixation (14, 14') sont prévus,
les trous de fixation (17g, 17k) sont respectivement formés au niveau d'une pluralité d'emplacements autour de la ligne d'axe de la portion d'extrémité côté périphérie intérieure (17e, 17j), et
dans chacun de la pluralité de boulons de fixation (14, 14'), la tête (14a, 14'a) de ceux-ci est montée sur la portion d'extrémité (12e) sur le côté ouverture d'aspiration (12c) du guide d'entrée d'air (12) et le bout (14c, 14c') de la tige (14b, 14'b) est fixé à chacun de la pluralité de trous de fixation (17g, 17k).

5. Compresseur centrifuge (10) selon l'une quelconque des revendications 1 à 4, dans lequel le boulon de fixation (14, 14 ') est formé d'acier laminé.

6. Turbocompresseur (100) comprenant :
le compresseur centrifuge (10) selon l'une quelconque des revendications 1 à 5; et
une turbine (20) qui est configurée pour tourner autour de la ligne d'axe et qui est reliée à l'arbre de rotor (30).
